# EUROPÄISCHE PATENTSCHRIFT

(11) **EP 2 476 140 B1**
(45) Veröffentlichungstag und Bekanntmachung des Hinweises auf die Patenterteilung: **02.04.2014**
(21) Anmeldenummer: 10757741.3
(22) Anmeldetag: 01.09.2010
(51) Int. Cl.: H01L 31/042

(54) **PHOTOVOLTAIKANLAGE GEBILDET DURCH EINE VIELZAHL VON PHOTOVOLTAIKMODULEN**
PHOTOVOLTAIC SYSTEM FORMED BY A PLURALITY OF PHOTOVOLTAIC MODULES
INSTALLATION PHOTOVOLTAÏQUE COMPOSÉE D'UNE PLURALITÉ DE MODULES PHOTOVOLTAÏQUES

(30) Priorität: 09.09.2009 IT BZ20090039
(43) Veröffentlichungstag der Anmeldung: 18.07.2012
(73) Patentinhaber: Czaloun, Hans Günter, 39040 Castelrotto (BZ) (IT)
(72) Erfinder: Czaloun, Hans Günter, 39040 Castelrotto (BZ) (IT)
(74) Vertreter: Ausserer, Anton
(86) Internationale Anmeldenummer: PCT/EP2010/062787
(87) Internationale Veröffentlichungsnummer: WO 2011/029758

(56) Entgegenhaltungen:
- EP-A- 0 373 234
- WO-A-2006/130892
- WO-A-2008/046362
- US-A1- 2008 168 981

## Beschreibung

Die vorliegende Erfindung bezieht sich auf eine Photovoltaikanlage gebildet durch eine Vielzahl von Photovoltaikmodulen gemäß dem Oberbegriff des Patentanspruchs 1.

Unter den zahlreichen technischen Varianten die entwickelt wurden, um die PV Module zu verankern, wurden auch verschiedene Tragkonstruktionen mit Seilen entwickelt bzw. realisiert. Dabei können die Seile nur die Aufgabe einer statischen Tragkonstruktion haben oder sie können zusätzlich die Funktion erhalten, die Module ein- oder zweiachsig der Sonne nachzuführen.

Der besondere Vorteil von Seiltragwerken gegenüber dem Massivbau aus starren Elementen besteht darin, dass mit relativ geringem Aufwand - etwa wie bei Seilbahnen - mit wenigen Zwischenstützen große Flächen überbrückt werden können, ohne dass Eingriffe am überbauten Gelände notwendig sind. Es ist in vielen Fällen sogar möglich das überbaute Gelände zusätzlich z.B. landwirtschaftlich zu nutzen.

Ein Nachteil der bekannten Seiltragsysteme besteht darin, dass die PV Paneele durch die Seile zumindest zeitweise verschattet werden.

Der Schattenwurf eines Seils verursacht aber bei handelsüblichen PV Paneelen einen erheblichen Leistungsverlust, der weit größer ist als es dem Verhältnis Schattenfläche zu Gesamtfläche entsprechen würde.

Bei den bekannten Seilkonstruktionen werden die Tragseile üblicherweise seitlich an den Modulen vorbei geführt, wodurch aber ein Schattenwurf der Seile auf die fotovoltaisch aktive Fläche bei seitlichem und tiefem Sonnenstand unvermeidlich ist.

Zudem müssen seitlich angeordnete Seile einen Abstand haben, der größer ist als die Länge der Module, d.h. dieses Konzept führt zu großen Dimensionen bei allen Bauteilen die quer zur Seilrichtung liegen.

Eine Verringerung der Seilspur auf ein Maß das deutlich geringer ist als die Modulbreite wurde bisher nicht realisiert, da bei den derzeit üblichen Baukonzepten aus Stabilitätsgründen gegen Windbelastung die Seile teilweise oberhalb der Module geführt werden müssten. Dies hätte einen dauernden Ertragsverlust durch den Schattenwurf dieser Seile auf die PV Module zur Folge.

In der Veröffentlichung WO 2006/130892 A (D1) ist eine Anlage zur Gewinnung von elektrischer Energie mittels auf einer Tragkonstruktion angeordneter photovoltaischer Elemente beschrieben. Es ist eine Gruppe von Masten oder dergleichen vorgesehen, an welchen ein überwiegend durch Seile gebildetes Tragwerk für die photovoltaischen Elemente befestigt ist. Die photovoltaischen Elemente befinden sich in Abstand oberhalb des Bodens. Dieser Veröffentlichung, wie dies überdies auch aus der Beschreibung und aus den Patentansprüchen hervorgeht, sind die photovoltaischen Elemente immer sowohl über die Tragseile als auch um eine Achse einstellbar, die in einer Ebene liegt, die Tragseile bzw. Einstellseile durchqueren. In dieser Lösung besteht daher immer das Problem, dass ein Teil eines photovoltaischen Elementes bei seiner Einstellung unterhalb einer Ebene bewegt wird, die von zwei Tragseilen gebildet wird und daher könnten die Tragseile auf die photovoltaischen Elemente ihre Schatten werfen.

Auch in der Veröffentlichung EP 0 373 234 A (D2) ist ein Solargenerator mit Solarzelleneinrichtungen und mit Seilen zur Halterung der Solarzelleneinrichtungen beschrieben. Die Seile sind vernetzt und die Solarzellen weisen einen Neigungswinkel von weniger als 90° bezüglich der Erdhorizontalen auf. Auch in dieser Veröffentlichung wird nicht das Problem eines Schattenwerfens auf die photovoltaischen Elemente behandelt.

Die Aufgabe der vorliegenden Erfindung ist daher die Beseitigung der Nachteile der Photovoltaikanlagen bekannter Art und der Vorschlag einer Photovoltaikanlage mit einem höchstmöglichen Energiegewinn, wobei vermieden werden soll, dass die einzelnen Photovoltaikelemente bzw. -module seitens der Tragkonstruktion, insbesondere der Seile verschattet werden.

Diese Aufgabe wird durch eine Photovoltaikanlage gebildet durch eine Vielzahl von Photovoltaikmodulen mit dem kennzeichnenden Teil des Patentanspruchs 1 gelöst.

Die Erfindung weist somit das Konzept auf, eine Vielzahl von PV Modulen auf mindestens zwei parallel zueinander gespannten Tragseilen anzubringen, bei denen die Module durch räumlich ecksteife Konsolen oder Träger zur Gänze über die Seilebene gehoben werden, wodurch eine Verschattung der fotovoltaisch aktiven Fläche durch die Seile vermieden wird. Die Module sind dabei entweder in fixer Stellung auf den Seilen verankert oder sie können durch entsprechende Gelenke auf den Konsolen sowie durch zusätzliche Verstelleinrichtungen ein- oder zweiachsig der Sonne nachgeführt werden.

Die gegenständliche Erfindung erlaubt es alle Seile unterhalb der Module zu führen, wodurch alle Einschränkungen die derzeit durch Seilverschattung gegeben sind, eliminiert werden.

Dadurch ist es auch möglich die Seilspur auf das statisch günstigste Maß zu verringern, was gegenüber seitlich vorbei geführten Seilen erhebliche technische und ökonomische Vorteile erlaubt.

Weiter Merkmale und Einzelheiten gehen aus den Patentansprüchen und aus der nachstehenden Beschreibung mehrerer unter Bezugnahme auf die Zeichnung erläuterten Ausführungsbeispiele hervor.
- Figur 1: zeigt schematisch die Anwendung des erfindungsgemäßen Konzeptes in der Ausführung mit fixen, d.h. nicht der Sonne nachgeführten Modulen.
- Figur 2: bis Figur 6 zeigen schematisch die Anwendung des erfindungsgemäßen Konzeptes in Kombination mit einem System zur Sonnen-Nachführung der Module.
- Figur 3: zeigt die Anwendung des erfindungsgemäßen Konzeptes in Kombination mit einer einachsigen Verstellbarkeit der Elevation α.
- Figur 4: zeigt eine weitere Möglichkeit der Elevationsverstellung.
- Figur 5: zeigt eine weitere Möglichkeit zur Veränderung des Elevationswinkels.
- Figur 6: zeigt in Form einer Zusammenstellung schematisch eine erfindungsgemäße Anlage.

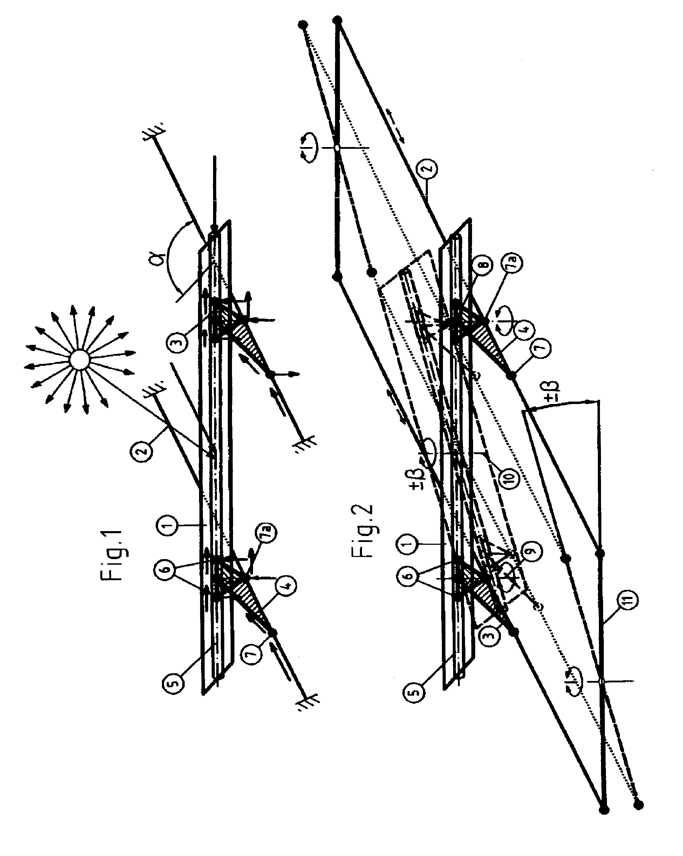

Figur 1 zeigt schematisch eine Photovoltaikanlage mit fixen Photovoltaikmodulen. Das Funktionsprinzip wird der Einfachheit halber an Hand eines einzigen Moduls 1 erläutert, in der praktischen Anwendung ist jedoch eine Vielzahl von parallel zueinander angeordneten Modulen sinnvoll.

Quer zu den Modulen verlaufende Tragseile 2 sind in diesem Fall an ihren Enden fix verankert. Die Befestigung der PV Module auf den Tragseilen erfolgt erfindungsgemäß durch Konsolen, welche die Module zur Gänze oberhalb der Seile halten. Die Konsolen bestehen aus einem in Querrichtung ecksteifen Rahmen, in diesem Fall als Dreieck dargestellt 3, und aus einem weiteren in Längsrichtung ecksteifen Rahmen, hier ebenfalls als Dreieck 4 dargestellt. Ein weiteres zur Kräfteübertragung notwendiges Element ist ein mit dem Modul verbundener biegesteifer Querträger 5 auf dem die Befestigungspunkte 6 in diesem Fall fix verankert sind.

Die äußeren Kräfte, also im Wesentlichen die Eigengewichts- und Windkräfte, werden von den Befestigungspunkten 6 auf die Konsole und von dieser über Klemmen 7 auf die Tragseile 2 weitergeleitet.

Die räumlich ecksteife Ausführung der Konsole ist geeignet um die Windkräfte aus allen Richtungen aufzunehmen. Die dabei auftretenden Kräfte sind teilweise mit entsprechenden Pfeilen angedeutet.

Die Figuren 2 bis 6 zeigen schematisch die Anwendung des erfindungsgemäßen Konzeptes in Kombination mit einem System zur Sonnen-Nachführung der Module. Die Kräfte und deren Ableitung in die Tragseile bleiben dabei grundsätzlich unverändert gegenüber den fix verankerten Modulen laut Figur 1.

Der Einfachheit halber werden die konstruktiven Lösungen entweder nur für die Verstellmöglichkeit in der horizontalen Ebene (Azimut, Winkel β) oder für die Verstellung des Höhenwinkels (Elevation, Winkel α) dargestellt.

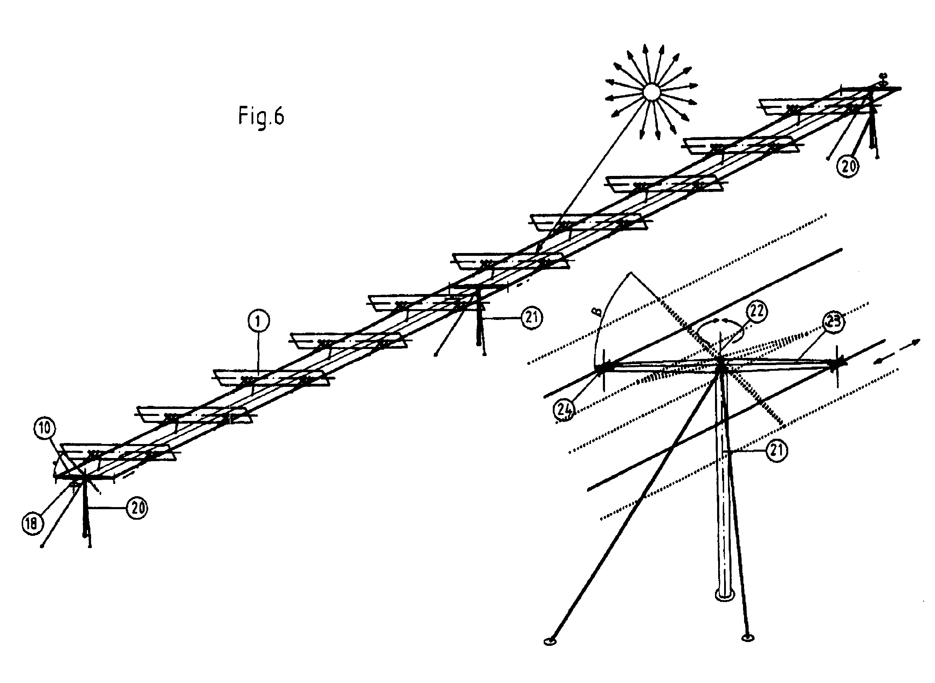

Es ist aber möglich die Azimutverstellung und die Elevationsverstellung in einer und derselben Ausführung zu kombinieren. Diese Kombination wird im Beispiel nach Figur 6 schematisch dargestellt.

Figur 2 zeigt die Anwendung des erfindungsgemäßen Konzeptes in der Ausführung mit der einachsigen Verstellbarkeit der Module in der Azimutebene.

In diesem Fall werden die Haltepunkte 6 und 7a als Gelenke realisiert, die eine Verschwenkung des ecksteifen Rahmens 3 gegenüber dem ecksteifen Rahmen 4 um die vertikale Achse 8 erlauben.

Bei gegenläufiger Bewegung der Tragseile kommt es bei dieser Anordnung zu einer Verschwenkung des Moduls in der horizontalen Ebene um die vertikale Achse 9. Die gegenläufige Bewegung der Tragseile kann in an sich bekannter Weise dadurch erzeugt werden, dass diese an ihren Enden an Querbalken 10 befestigt werden, die in der horizontalen Ebene verdreht werden können.

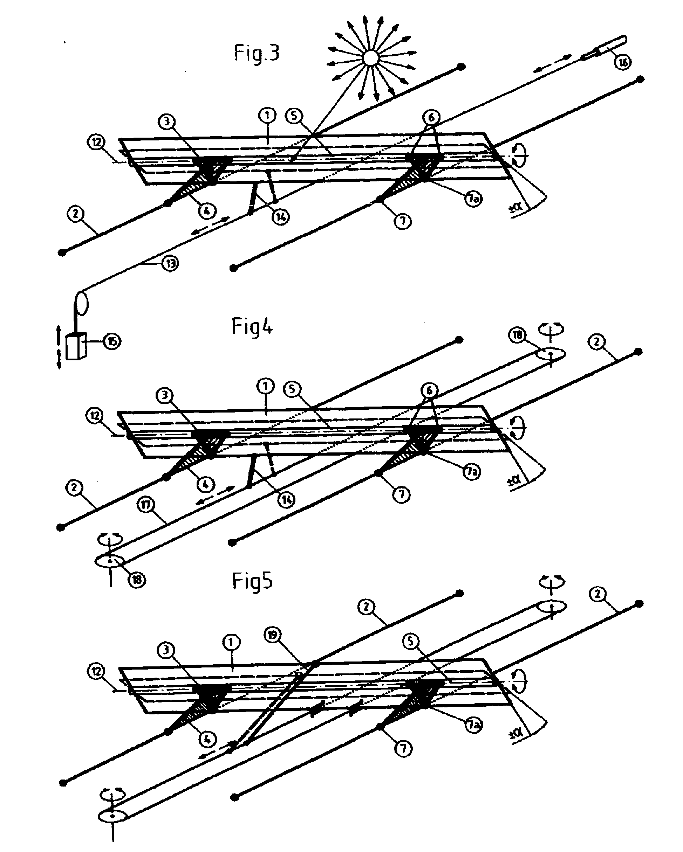

Figur 3 zeigt die Anwendung des erfindungsgemäßen Konzeptes in Kombination mit einer einachsigen Verstellbarkeit der Elevation α.

Die Rotation zur Veränderung der Elevation erfolgt um die horizontale Achse 12, die vorzugsweise höhenmäßig mit der Mitte der Modulfläche übereinstimmt, da in diesem Fall die Windkräfte oberhalb und unterhalb der Achse im Gleichgewicht stehen, d.h. bei gleichmäßigem Wind keine Belastung auf das Verstellsystem eingeleitet wird.

Erreicht wird die Verdrehung um den Winkel α in diesem Fall durch die Längsbewegung des parallel zu den Tragseilen gespannten Stellseils 13, das über die Kipphebel 14 mit den Modulen verbunden ist. Das Stellseil wird dabei erfindungsgemäß durch ein Spanngewicht 14 oder eine vergleichbare Einrichtung unter Spannung gehalten und am zweiten Ende durch einen Zylinder 16 oder eine Winde entsprechend den Steuerbefehlen in Längsrichtung verschoben.

Figur 4 zeigt eine weitere Möglichkeit der Elevationsverstellung über Kipphebel und Stellseil, aber bei dieser Lösung wird die Seilspannung und die Möglichkeit der Längsverschiebung durch einen geschlossenen Zugseilring 17 erreicht. Die Kipphebel 14 sind gelenkig mit dem Strang des Zugseilringes verbunden, der durch Drehung von einer der Umlenkscheiben 18 nach Bedarf in Längsrichtung bewegt werden kann.

In der Figur 5 wird eine weitere Möglichkeit zur Veränderung des Elevationswinkels dargestellt, bei der die Verbindung zwischen Stellseil und Modul durch eine Schubstange 19 erfolgt. Die Schubstangen sind beidseitig über Kugelgelenke oder vergleichbaren Elemente angeschlossen und damit in der Lage, Relativbewegungen in Querrichtung vom unteren gegenüber dem oberen Befestigungspunkt auszugleichen. Derartige Relativbewegungen führen beim Fehlen einer Ausgleichsmöglichkeit zur seitlichen Ablenkung des Stellseiles, wenn Azimut- und Elevationsverstellung überlagert werden.

Eine weitere grundsätzliche Möglichkeit zur Elevationsverstellung besteht darin, das Zugseil durch eine Stange zu ersetzten die sowohl Zug- als auch Druckkräfte übertragen kann. (hier nicht gezeichnet)

Alle Übertragungselemente für die Verstellbewegung befinden sich auf der der Sonne abgewandten Seite, wodurch eine Verschattung der PV Fläche durch diese Teile nicht möglich ist.

Figur 6 zeigt in Form einer Zusammenstellung schematisch eine erfindungsgemäße Anlage bei der sowohl die Elevation α als auch der Azimut β in einer und derselben Anlage entsprechend dem Sonnenstand verstellt werden kann. Angedeutet wird die Elevationsverstellung entsprechend Variante nach Figur 5.

Zwischenstützen 21 erhalten in diesem Fall vorzugsweise einen um die vertikale Achse 22 drehbaren Querbalken 23 der in Funktion und Ausführung grundsätzlich den Querbalken 10 der Endverankerung entspricht. Die Tragseile werden über die gelenkig fixierten Klemmen 2) mit den Enden des Querbalkens verbunden, wodurch sich dieser synchron zu den Querbalken 10 der Endstützen (20) bzw. zum Tragelement 3 der Konsole verdreht.

## Patentansprüche

1. Photovoltaikanlage gebildet durch eine Vielzahl von Photovoltaikmodulen (1) auf mindestens zwei parallelen, zwischen zwei Verankerungspunkten gespannten Tragseilen (2), **dadurch gekennzeichnet, dass** die Photovoltaikmodulen durch Konsolen bzw. Halter zur Gänze oberhalb der Seile gehalten werden, dass diese Konsolen aus mindestens einem in Querrichtung ecksteifen Rahmen (3) und einem in Längsrichtung ecksteifen Rahmen (4) bestehen und durch Klemmen (7) auf den Tragseilen verankert werden.

2. Photovoltaikanlage nach Anspruch 1, **dadurch gekennzeichnet, dass** der Rahmen (4) gelenkig mit dem Rahmen (3) verbunden ist, wodurch sich diese Elemente um die Achse (8) gegeneinander verdrehen können, sodass eine gegenläufige Bewegung der Tragseile (2) zu einer Verdrehung des Moduls um den Winkel β in der horizontalen Ebene führt.

3. Photovoltaikanlage nach Anspruch 1, **dadurch gekennzeichnet, dass** die Befestigungspunkte (6) zwischen dem Rahmen (3) und dem Modul (1) als Gelenke gestaltet werden, die ungefähr in halber Höhe der Modulfläche auf einer gemeinsamen horizontalen Achse (12) liegen, wodurch eine Verstellung des Elevationswinkels α über einen Kipphebel (14) ohne wesentliche Belastung durch die Windkräfte ermöglicht wird.

4. Photovoltaikanlage nach Anspruch 1 und 3, **dadurch gekennzeichnet, dass** der Kipphebel zur Verstellung des Elevationshebels (14) durch ein Stellseil (13) betätigt wird, das an einem Ende durch ein Spanngewicht (15) oder eine gleichwertige Einrichtung gespannt wird bzw. am anderen Ende durch einen Zylinder (16) oder eine gleichwertige Einrichtung in Längsrichtung verschoben wird.

5. Photovoltaikanlage nach Anspruch 1, 3 oder 4, **dadurch gekennzeichnet, dass** der Kipphebel zur Verstellung des Elevationswinkels α (14) durch ein Stellseil betätigt wird, das in Form eines geschlossenen Zugseilringes (17) angeordnet ist, der an beiden Ende der Anlage durch die Umlenkscheiben (18)umgelenkt wird, von denen eine zur Erzeugung der Verstellbewegung durch einen geeigneten Antrieb in Rotation versetzt werden kann.

6. Photovoltaikanlage nach Anspruch 1, 3, 4 oder 5, **dadurch gekennzeichnet, dass** die Verbindung der Kipphebel (14) mit den Stellseilen (13) oder (17) zur Verstellung des Elevationswinkels α über eine Schubstange (19) erfolgt.

7. Photovoltaikanlage nach Anspruch 1 und 3, **dadurch gekennzeichnet, dass** zur Verstellung des Elevationswinkels α anstelle von Seilen eine durchgehende Zug-Druckstange benützt wird.

8. Photovoltaikanlage nach Anspruch 1 bis 7, **dadurch gekennzeichnet, dass** die erfindungsgemäßen Einrichtungen zur Azimutverstellung wie auch jene zur Elevationsverstellung in ein und derselben Anlage kombiniert werden, wodurch eine zweiachsige Sonnennachführung erzielt wird.

## Claims

1. Photovoltaic system formed by a plurality of photovoltaic modules (1) on at least two load-bearing cables (2), parallel to each other, stretched between two anchoring points, **characterised in that** the photovoltaic modules are supported by shelves or respectively supports completely above the cables, these shelves or respectively supports consist of at least one frame (3) rigid at the corners in a transversal direction and one frame, rigid at the corners in a longitudinal direction and are anchored by means of a vice (7) on the load-bearing cables.

2. Photovoltaic system according to claim 1, **characterised in that** the frame (4) is connected articulated to the frame (3), so that these frames are rotatable between each other around the axle (8) in such a way that movement of the load bearing cables (2) in opposite directions leads to the rotation of the module by the angle β in the horizontal plane.

3. Photovoltaic system according to claim 1, **characterised in that** the fixing points (6) between the frame (3) and the module (1) are configured as articulations which are substantially located half way up the surface of the modules on a common horizontal axle (12), so that an adjustment of the elevation angle α can be made by means of a rocker (14) without substantial stress due to forces resulting from the wind.

4. Photovoltaic system according to claims 1 and 3, **characterised in that** the rocker is activated for the adjustment of the elevation lever (14) by means of an adjustment cable (13) which is stretched at one end by a strainer weight (15) or by an equivalent device or respectively the other end is moved by means of a cylinder (16) or by an equivalent device in a longitudinal direction.

5. Photovoltaic system according to claims 1, 3 and 4, **characterised in that** the rocker is activated for the adjustment of the elevation angle α (14) by means of an adjustment cable which is arranged in the form of a ring (17) of a traction cable which is deviated at both ends of the system by means of return pulleys (18), one of which can be adjusted for creating the adjustment movement by means of a suitable rotating action.

6. Photovoltaic system according to claims 1, 3, 4 or 5, **characterised in that** the connection of the rocker (14) to the adjustment cables (13) or (17) occurs for the adjustment of the elevation angle α by means of a control rod (19).

7. Photovoltaic system according to claims 1 and 3, **characterised in that** for the adjustment of the elevation angle α a passing traction-compression rod is used instead of the cables.

8. Photovoltaic system according to claims 1 to 7, **characterised in that** the devices for the adjustment of the azimuth as well as those for the adjustment of the elevation are combined in one and the same system, so that the sun can be pursued on two axles.

## Revendications

1. Centrale photovoltaïque formée d'une pluralité de modules photovoltaïques (1) sur au moins deux câbles porteurs (2), parallèles entre eux, tendus entre deux points d'ancrage, **caractérisée en ce que** les modules photovoltaïques sont supportés par des consoles ou respectivement des supports totalement en dessus des câbles, et **en ce que** ces consoles ou respectivement ces supports se composent d'au moins un châssis (3) rigide au niveau des coins en direction transversale et d'un châssis (4), rigide au niveau des coins en direction longitudinale, et qui sont ancrés par des étaux (7) aux câbles porteurs

2. Centrale photovoltaïque selon la revendication 1, **caractérisée en ce que** le châssis (4) est relié de manière articulée au châssis (3), ces châssis étant ainsi pivotants l'un par rapport à l'autre autour de l'axe (8) de façon qu'un mouvement dans les sens opposés des câbles porteurs (2) entraine un pivotement du module d'un angle β sur le plan horizontal.

3. Centrale photovoltaïque selon la revendication 1, **caractérisée en ce que** les points de fixation (6) entre le châssis (3) et le module (1) sont conformés comme des articulations qui se trouvent sensiblement à mi-hauteur de la surface des modules sur un axe horizontal commun (12), un réglage de l'angle de site α par un balancier (14) étant ainsi possible sans contraintes sensibles dues à l'effet du vent.

4. Centrale photovoltaïque selon les revendications 1 et 3, **caractérisée en ce que** le balancier est entrainé, pour le réglage du levier de site (14), par le biais d'un câble de réglage (13) qui est tendu à une de ses extrémités par un poids tendeur (15) ou par un dispositif équivalent ou respectivement l'autre extrémité est déplacée par le biais d'un cylindre (16) ou d'un dispositif équivalent en direction longitudinale.

5. Centrale photovoltaïque selon les revendications 1, 3 et 4, **caractérisée en ce que** le balancier est entrainé, pour le réglage de l'angle de site α (14), par le biais d'un câble de réglage qui est arrangé en forme d'une boucle (17) d'un câble de traction qui est renvoyée aux deux extrémités de la centrale par le biais de poulies de renvoi (18), l'une desquelles peut être réglée pour obtenir le mouvement de réglage par le biais d'un entrainement approprié en pivotement.

6. Centrale photovoltaïque selon les revendications 1, 3, 4 ou 5, **caractérisée en ce que** la liaison du balancier (14) aux câbles de réglage (13) ou (17) se fait pour le réglage de l'angle de site α par le biais d'une tige de commande (19).

7. Centrale photovoltaïque selon les revendications 1 et 3, **caractérisée en ce que**, pour le réglage de l'angle de site α, une tige traversante de traction-compression est employée au lieu des câbles.

8. Centrale photovoltaïque selon les revendications de 1 à 7, **caractérisée en ce que** les dispositifs pour le réglage de l'azimut et ceux pour le réglage du site sont combinés dans une même centrale, de façon à obtenir un suivi du soleil sur deux axes.
